# EUROPEAN PATENT SPECIFICATION

(11) **EP 2 996 317 B1**
(45) Date of publication and mention of the grant of the patent: **07.08.2019**
(21) Application number: 15184430.5
(22) Date of filing: 09.09.2015
(51) Int. Cl.: H04M 1/725, G06F 3/16, G06F 3/0481, G06F 3/0484

(54) **METHOD FOR PROVIDING SPECIALIZED MODE ACCORDING TO DATE AND ELECTRONIC DEVICE SUPPORTING THE SAME**
VERFAHREN ZUR BEREITSTELLUNG EINES SPEZIALISIERTEN MODUS GEMÄSS DATUM UND ELEKTRONISCHE VORRICHTUNG DAMIT
PROCÉDÉ POUR FOURNIR UN MODE SPÉCIALISÉ SELON LA DATE ET SON SUPPORT DE DISPOSITIF ÉLECTRONIQUE

(30) Priority: 12.09.2014 KR 20140120993
(43) Date of publication of application: 16.03.2016
(73) Proprietor: Samsung Electronics Co., Ltd., Gyeonggi-do 16677 (KR)
(72) Inventor: LEE, Bona, 16677 Gyeonggi-do (KR); NAN, Meihua, 16677 Gyeonggi-do (KR); CHOI, Yoonjeong, 16677 Gyeonggi-do (KR); KANG, Hyejin, 16677 Gyeonggi-do (KR); LIM, Donghoe, 16677 Gyeonggi-do (KR)
(74) Representative: HGF Limited

(56) References cited:
- EP-A1- 2 469 813
- EP-A1- 2 503 764
- EP-A1- 2 750 054
- US-A1- 2009 165 145
- US-A1- 2013 130 669
- US-A1- 2014 123 022

## Description

### TECHNICAL FIELD

The present disclosure relates to a method for providing a specialized mode according to a date, in particular, although not exclusively, to automatically providing a date-related operational mode of an electronic device.

### BACKGROUND

With the remarkable progress of information communication technology, semiconductor technology, and the like, the spread and use of electronic devices has recently been rapidly increasing.

Electronic devices first provided primary services, such as a voice call, transmission of a text message, and the like.

Recently, electronic devices, such as laptop computers, provide various services (e.g., a mobile communication function, a short-range wireless communication function, a broadcast receiving function, an Internet access function, etc.) through a wireless Internet.

The electronic device provides various functions for improving the convenience of a user on the basis of a use history.

Among other functions, the electronic device receives data from a server on a particular day that the user has previously registered in the electronic device, or a particular day that the electronic device has independently analyzed, and automatically changes a wallpaper of the electronic device.

US2013/130669 and EP2469813 disclose electronic devices with business and private modes, one of which is selected based on work periods of non-work periods. US2014/123022 discloses an electronic device in which application shortcuts are provided on a home screen based on conditions detected by the device.

The above information is presented as background information only to assist with an understanding of the present disclosure.

No determination has been made, and no assertion is made, as to whether any of the above might be applicable as prior art with regard to the present disclosure.

### SUMMARY

However, according to the related art, it is disadvantageous in that a subject, that the electronic device changes on the basis of the use history, is limited to a wallpaper. A simple and automatic change of the wallpaper can call the attention of the user to notify the user of the particular day, but is disadvantageous in that functions of the electronic device cannot be extended.

The present disclosure seeks to address at least the above-mentioned problems and/or disadvantages and to provide at least the advantages described below. Accordingly, the present disclosure seeks to provide a method and an apparatus which can automatically change a mode of an electronic device so as to meet a particular day registered in the electronic device and thereby enable the user to easily perform a function related to the particular day.

It is an aim of certain embodiments of the invention to solve, mitigate or obviate, at least partly, at least one of the problems and/or disadvantages associated with the prior art. Certain embodiments aim to provide at least one of the advantages described below.

In accordance with a first aspect of the invention, there is provided a method for providing a specialized mode (which may also be described as a date-specific, or date-related mode) in an electronic device according to the appended claims.

The method may also be described as a method of operation of an electronic device. In other words, the method steps are performed automatically by the device.

The method includes determining whether a current date corresponds to a particular day, changing (or setting) a mode of the electronic device to a mode (e.g. specialized mode) related to the particular day, when the current date corresponds to the particular day, and displaying a home screen in the changed specialized mode (i.e. in the mode related to the particular day).

The method may further comprise: outputting at least one of a lock screen wallpaper effect related to the particular day, an output effect according to a touch related to the particular day, a ringtone effect related to the particular day, and an effect sound related to the particular day.

The outputting of the effect may comprise configuring and outputting a melody (e.g. as an effect sound, for example according to a sequential order in which keys are pressed or touched on a keypad).

The configuring and outputting of the melody may comprise: detecting a melody corresponding to the particular day; and outputting a sound corresponding to a key pressed on the keypad based on the detected melody.

The method may further comprise transmitting the effect to another electronic device according to a request of a user.

The method may further comprise determining whether the other electronic device is located within a predetermined distance; and changing a wallpaper in such a manner as to operate in conjunction with the other electronic device, when the other electronic device is located within a predetermined distance.

The method may further comprise changing the wallpaper to an original wallpaper when the other electronic device moves out of the predetermined distance.

The particular day may comprise one day or multiple days, and the method may further comprise notifying of the particular day on a preset date before the particular day.

The notifying of the particular day may comprise: displaying a countdown to the particular day on the preset date before the particular day.

The method may include executing a selected function comprising first displaying a contact of another user, for whom the current date is designated as a particular day, in a telephone directory.

An electronic device may be adapted, configured, or arranged to implement a method as described above.

In accordance with a second aspect of the invention, there is provided an electronic device as claimed in the appended claims.

The electronic device includes a control unit configured to determine whether a current date corresponds to a particular day, and change or set a mode of the electronic device to a mode (e.g. a specialized mode) related to the particular day, when the current date corresponds to the particular day, and a display unit configured to display a home screen in the mode related to the particular day (e.g. the changed specialized mode).

The device (e.g. its control unit) may be arranged to perform a control operation for outputting at least one of a lock screen wallpaper effect related to the particular day, an output effect according to a touch related to the particular day, a ringtone effect related to the particular day, and an effect sound effect related to the particular day.

The control unit may be further configured to configure a melody as the effect sound, for example according to a sequential order in which keys are pressed on a keypad.

The device may further comprise an audio processing unit configured to output the configured melody.

The control unit may be arranged to detect or determine a melody corresponding to the particular day, and to control the audio processing unit to output a sound (e.g. corresponding to a key pressed on the keypad) based on the detected melody.

The control unit may be arranged to collect or determine a use history of the electronic device which corresponds to the particular day, and to configure the home screen, or a widget included in the home screen, based on the use history.

The device may further comprise a communication unit for transmitting the effect to another electronic device according to a request of a user.

The control unit may be further configured to: determine whether the other electronic device (in other words the second electronic device) is located within a predetermined distance (of the electronic device, which may be described as a first electronic device), and change a wallpaper in such a manner as to operate in conjunction with the other electronic device, when the another electronic device is located within the predetermined distance.

The control unit may be further configured to change the wallpaper to an original wallpaper when it is detected that the another electronic device moves out of the predetermined distance.

The particular day may comprise one day or multiple days.

The control unit may be further configured to notify the user of the particular day on a preset date before the particular day.

The control unit may be further configured to display a countdown to the particular day on the preset date before the particular day.

The control unit may be further configured to perform a control operation for first displaying a contact of another user, for whom the current date is designated as a particular day, in a telephone directory.

When the current date corresponds to a particular day, a mode of the electronic device may be changed or set to a mode (e.g. a specialized mode, specific mode, preset mode, or predetermined mode) corresponding to the particular day, so that a meaningful emotional value can be augmented.

The display of a home screen, which includes a widget in the specialized mode corresponding to the particular day, may allow the user to easily access a function or information desired by the user through the widget, so that the convenience of the user can be improved.

A function or information may be differently provided to the widget in the specialized mode on the basis of a use history of the user corresponding to the particular day, so that the electronic device can be specialized to meet the specialized mode of the electronic device.

A computer program may be provided, which comprises instructions arranged, when executed, to implement a method and/or apparatus as described above. A machine-readable storage may be provided, storing such a program.

It will be appreciated from the following description that, in certain embodiments of the invention, features concerning the graphic design of user interfaces are combined with interaction steps or means to achieve a technical effect.

It will be appreciated from the following description that, in certain embodiments of the invention, graphic features concerning technical information (e.g. internal machine states) are utilised to achieve a technical effect.

Certain embodiments aim to achieve the technical effect of lowering a burden (e.g. a cognitive, operative, operational, operating, or manipulative burden) of a user when performing certain computer or device interactions.

Certain embodiments aim to achieve the technical effect of providing a more efficient man-machine (user-machine) interface.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram illustrating a configuration of an electronic device according to an embodiment of the present disclosure;
FIG. 2 is a flowchart illustrating a method for providing a specialized mode according to a date according to an embodiment of the present disclosure;
FIG. 3 is a view illustrating examples of home screens in specialized modes according to various embodiments of the present disclosure;
FIGS. 4A, 4B, 4C, and 4D are views each illustrating an example of executing a function through a widget within a home screen according to various embodiments of the present disclosure;
FIGS. 5A, 5B, 5C, 5D, and 5E are views illustrating examples of applying effects according to various embodiments of the present disclosure;
FIGS. 6A and 6B are views illustrating an example of sending a card on a birthday according to various embodiments of the present disclosure; and
FIG. 7 is a view illustrating an example of providing a telephone directory according to an embodiment of the present disclosure.

Throughout the drawings, like reference numerals will be understood to refer to like parts, components, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding, but these are to be regarded as merely exemplary. Accordingly those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but are merely used by the inventor to enable a clear and consistent understanding of the present disclosure. Accordingly, it should be apparent to those skilled in the art that the following description of various embodiments of the present disclosure is provided for illustration purposes only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

An electronic device according to an embodiment of the present disclosure may be a device with a communication function. For example, the electronic device may include at least one of a smartphone, a tablet personal computer (PC), a mobile phone, a video phone, an electronic book (e-book) reader, a desktop PC, a laptop PC, a netbook computer, a personal digital assistant (PDA), a portable multimedia player (PMP), a Moving Picture Experts Group phase 1 or phase 2 (MPEG-1 or MPEG-2) audio layer 3 (MP3) player, a mobile medical appliance, a camera, and a wearable device (e.g. a head-mounted-device (HMD) such as electronic glasses, electronic clothes, an electronic bracelet, an electronic necklace, an electronic appcessory, electronic tattoos, or a smartwatch).

According to an embodiment of the present disclosure, the electronic device may be a smart home appliance with a communication function. The smart home appliance as an example of the electronic device may include at least one of, for example, a television (TV), a digital versatile disc (DVD) player, an audio player, a refrigerator, an air conditioner, a vacuum cleaner, an oven, a microwave oven, a washing machine, an air cleaner, a set-top box, a TV box (e.g. , Samsung HomeSync™, Apple TV™, or Google TV™), a game console, an electronic dictionary, an electronic key, a camcorder, and an electronic picture frame.

According to an embodiment of the present disclosure, the electronic device may include at least one of various types of medical devices (for example, magnetic resonance angiography (MRA), magnetic resonance imaging (MRI), computed tomography (CT), a scanning machine, ultrasonic wave device and the like), a navigation device, a global positioning system (GPS) receiver, an event data recorder (EDR), a flight data recorder (FDR), a car infotainment device, ship electronic equipment (for example, navigation equipment for a ship, a gyro compass and the like), avionics, a security device, and an industrial or home robot.

According to an embodiment of the present disclosure, the electronic device may include at least one of furniture or a part of a building/structure, an electronic board, an electronic signature receiving device, a projector, and various types of measuring devices (for example, a water meter, an electric meter, a gas meter, a radio wave meter and the like) including a camera function. The electronic device may be a combination of one or more of the aforementioned various devices. Further, it is obvious to those skilled in the art that the electronic device is not limited to the aforementioned devices.

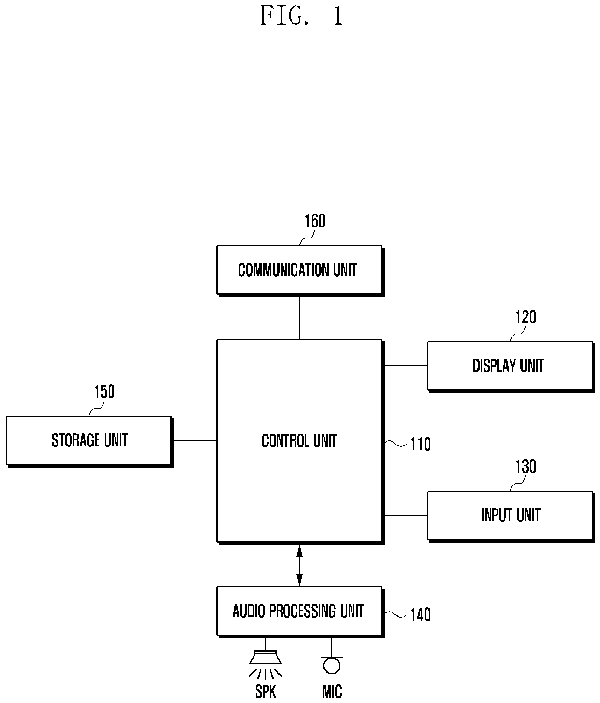

FIG. 1 is a block diagram illustrating a configuration of an electronic device according to an embodiment of the present disclosure.

Referring to FIG. 1, the electronic device 100 may include a control unit 110, a display unit 120, an input unit 130, an audio processing unit 140, a storage unit 150, and a communication unit 160.

The control unit 110 controls an overall operation of the electronic device 100 and a signal flow between the internal elements of the electronic device 100, performs a function of processing data, and controls the supply of power from a battery to the other elements of the electronic device 100. The control unit 110 may be a central processing unit (CPU) or a graphics processing unit (GPU). The CPU is a key control unit of a computer system that performs calculation and comparison of data, interpretation and execution of instructions, and the like. The GPU is a graphic control unit that performs calculation and comparison of graphic-related data, interpretation and execution of related instructions, and the like. In each of the CPU and the GPU, two or more independent cores (e.g., a quad-core processor) may be integrated into one package composed of a single integrated circuit (IC). The CPU and the GPU may be integrated into one chip (i.e., system on chip (SoC)). The CPU and the GPU may be packaged in multiple layers. A structure including the CPU and the GPU may be referred to as an application processor (AP).

When the current date corresponds to a particular day which is set on the electronic device 100, the control unit 110 may change a mode of the electronic device 100 to a specialized mode corresponding to the particular day. The control unit 110 may control the display unit 120 to display a home screen including a widget in the changed specialized mode. The home screen in the specialized mode may be edited in response to a user input. The control unit 110 may perform a function that a user selects through the widget.

The display unit 120 displays the home screen in the specialized mode. The display unit 120 displays an image on a screen under the control of the control unit 110. When the control unit 110 processes (e.g., decodes) data as an image to be displayed on the screen and stores the processed data in a buffer, the display unit 120 converts the image stored in the buffer into an analog signal, and displays the analog signal. The display unit 120 may be implemented by a liquid crystal display (LCD), an organic light emitting diode (OLED) display, an active matrix OLED (AMOLED) display, and/or a flexible display.

The input unit 130 may include multiple keys for receiving, as input, numeric or character information and setting various functions. Examples of the keys may include a menu loading key, a screen on/off key, a power on/off key, a volume control key, and the like. The input unit 130 generates a key event related to a user's setting and function control of the electronic device 100 and delivers the key event to the control unit 110. Examples of the key event may include a power on/off event, a volume control event, a screen on/off event, a shutter event, and the like. The control unit 110 controls the above-described elements in response to the key event. A key of the input unit 130 may be referred to as a "hard key," and a virtual key displayed by the display unit 120 may be referred to as a "soft key."

According to an embodiment of the present disclosure, the display unit 120 and the input unit 130 may be a touch screen configured such that the display unit 120 is integrated with the input unit 130.

The audio processing unit 140 may output a voice signal under the control of the control unit 140. The audio processing unit 140 is combined with a speaker SPK and a microphone MIC, and inputs and outputs audio signals (e.g., voice data) for voice recognition, voice recording, digital recording, and a telephone call. The audio processing unit 140 receives an audio signal from the microphone or the communication unit 160, digital-to-analog (D/A) converts the received audio signal into an analog signal, amplifies the analog signal, and outputs the amplified analog signal through the speaker SPK. The speaker SPK converts the received audio signal into a sound wave and outputs the sound wave. The microphone MIC converts a sound wave, which is delivered by a person or other sound sources, into an audio signal.

The storage unit 150 may store the particular day, and may store a home screen corresponding to the particular day. Under the control of the control unit 110, the storage unit 150 stores data (e.g., a short message service (SMS) message, a multimedia messaging service (MMS) message, a social network service (SNS) message, and an email) which is generated by the electronic device 100 or is received from an external device through the communication unit 160. The storage unit 150 stores a booting program, at least one operating system, and applications. The storage unit 150 may store various setting information (e.g., screen brightness, elements of a lock screen, etc.) for setting a use environment of the electronic device 100. Accordingly, the control unit 110 may operate the electronic device 100 with reference to the setting information.

The storage unit 150 may include a main memory and a secondary memory. The main memory may be implemented by, for example, a random access memory (RAM) and the like. The secondary memory may be implemented by a RAM, a read-only memory (ROM), a flash memory, and/or the like. The main memory may store various programs, for example, a booting program, an operating system (e.g., a kernel), middleware, an application programming interface (API), and an application loaded from the secondary memory. The storage unit 150 may further include an external memory. The storage unit 150 may include an external memory, such as, for example, a compact flash (CF), a secure digital (SD), a micro-SD, a mini-SD, an extreme digital (xD), a memory stick, or the like.

Under the control of the control unit 110, the communication unit 160 performs a voice call, a video call, or data communication between the electronic device 100 and the external device through a network. The communication unit 160 includes a radio frequency (RF) transmitter for upconverting the frequency of a signal to be transmitted and amplifying the upconverted signal, and an RF receiver for low-noise amplifying a received signal and downconverting the frequency of the low-noise amplified signal. The communication unit 160 may include a cellular module (e.g., a communication module that provides a voice call, a video call, a text service, an Internet service, or the like through a communication network (e.g., long term evolution (LTE), LTE-advanced (LTE-A), code division multiple access (CDMA), wideband CDMA (WCDMA), universal mobile telephone system (UMTS), wireless broadband Internet (WiBro), global system for mobile communications (GSM), or the like)), a digital broadcast module (e.g., a digital multimedia broadcasting (DMB) module), and a short-range communication module (e.g., a Wi-Fi module, a Bluetooth module, a near field communication (NFC) module).

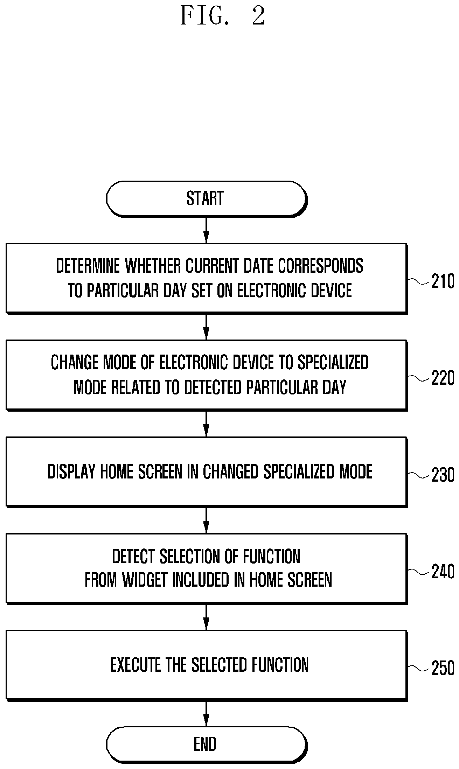

FIG. 2 is a flowchart illustrating a method for providing a specialized mode according to a date according to various embodiments of the present disclosure.

Referring to FIG. 2, in operation 210, the control unit 110 determines whether the current date corresponds to a particular day. Examples of the particular day may include not only a birthday and an anniversary that the user directly sets, but also dates, such as New Year's Day, Thanksgiving Day, and Christmas Day, which are pre-registered in a calendar. The particular day may be one day or several days. The input unit 130 may receive the particular day as input from the user of the electronic device 100. The user may input, together, the date of the particular day and additional information on the particular day. The additional information may include content, such as text, an image, audio, a moving image, and the like which describe the particular day, and a date which notifies of the particular day. The control unit 110 may store the input particular day or the additional information in the storage unit 150, and thereby may register the particular day in the electronic device 100.

In operation 220, when the current date corresponds to the particular day, the control unit 110 may change a mode of the electronic device 100 to a specialized mode related to the particular day. The specialized mode may be set to provide a home screen or an effect specialized to meet the particular day. The home screen of the specialized mode may be edited in response to a user input. The home screen is displayed on a wallpaper of the electronic device 100. For example, the electronic device 100 may have one or more modes in which various home screens are provided according to usage characteristics of the electronic device 100. When the current date corresponds to a normal day which is not the particular day, the electronic device 100 may be set to a normal mode. The normal mode is a normal use mode, and may be a default mode to which the electronic device is set when the electronic device is manufactured. Alternatively, the electronic device 100 may be set to an easy mode for the user who has poor eyesight. The easy mode may be a mode in which an icon or a font, which is displayed by the display unit 120, is more largely displayed than in the normal mode. The electronic device 100 may have various modes. The control unit 110 may perform a control operation for providing different home screens according to a mode which is set on the electronic device 100.

According to various embodiments of the present disclosure, the home screen in the specialized mode may include at least one icon or widget corresponding to the particular day. The icon is for executing a function, and may be, for example, an icon corresponding to an application. The widget may be a toolbar having a collection of frequently-used functions. According to an embodiment of the present disclosure, the widget may be a collection of a function of changing the layout of a home screen so as to meet the particular day, a function of changing, in real time, a particular area within a home screen, and a frequently-used function. In order to execute a function by the electronic device 100, it is necessary to select an application appropriate for the function. In this sense, in various embodiments of the present disclosure, the execution of a function may signify the execution of an application.

The home screen in the specialized mode may be changed according to a user input, or may be obtained by adding a home screen related to the particular day to the existing home screen. For example, the home screen in the specialized mode may be newly generated according to the user input received through the input unit 130. The home screen in the specialized mode may be a home screen newly generated by the user, a home screen obtained by modifying the existing home screen so as to meet the particular day, or a home screen obtained by adding an element to the existing home screen so as to meet the particular day.

The widget is provided to improve the convenience of the user, and thus the widget on the home screen may be provided in such a manner as to provide different widgets according to the particular day. To this end, the control unit 110 may configure the widget on the basis of a use history of the electronic device 100. The control unit 110 may collect the use history of the electronic device 100 during a predetermined time period. The use history may be collected for each particular day. The control unit 110 may store the collected use history in the storage unit 150.

For example, on a birthday, the control unit 110 may collect the use history by executing applications related to a gallery, a famous restaurant, and travel. In this case, when the particular day is a birthday, the control unit 110 may perform a control operation for including, in the widget, application icons related to a gallery, a famous restaurant, and travel. Alternatively, on New Year's Day, the control unit 110 may collect the use history by executing applications related to a message, a contact, and wayfinding. In this case, when the particular day is New Year's Day, the control unit 110 may perform a control operation for including, in the widget, application icons related to a message, a contact, and wayfinding.

In operation 230, the control unit 110 may control the display unit 120 to display a home screen in the changed specialized mode. In operation 240, the control unit 110 may detect the selection of any one function from a widget included in the home screen. When the display unit 120 and the input unit 130 are implemented by a touch screen, the touch screen may detect a touch. The touch screen may deliver the position of the detected touch to the control unit 110. The control unit 110 may regard the received position of the detected touch as the selection of a function corresponding to the position of the detected touch.

In operation 250, the control unit 110 may execute the selected function. For example, the control unit 110 may execute a gallery application in response to the selection of a gallery widget. The control unit 110 may execute the function so as to correspond to the particular day. For example, when the particular day is Christmas Day, the control unit 110 may arrange photographs, which have been stored on the last Christmas Day, at the gallery, and may display the gallery. When the particular day has passed, the control unit 110 may change the mode of the electronic device 100 back to the original (or previous) mode. When the original mode is the normal mode, the control unit 110 may change the mode of the electronic device 100 from the specialized mode to the normal mode.

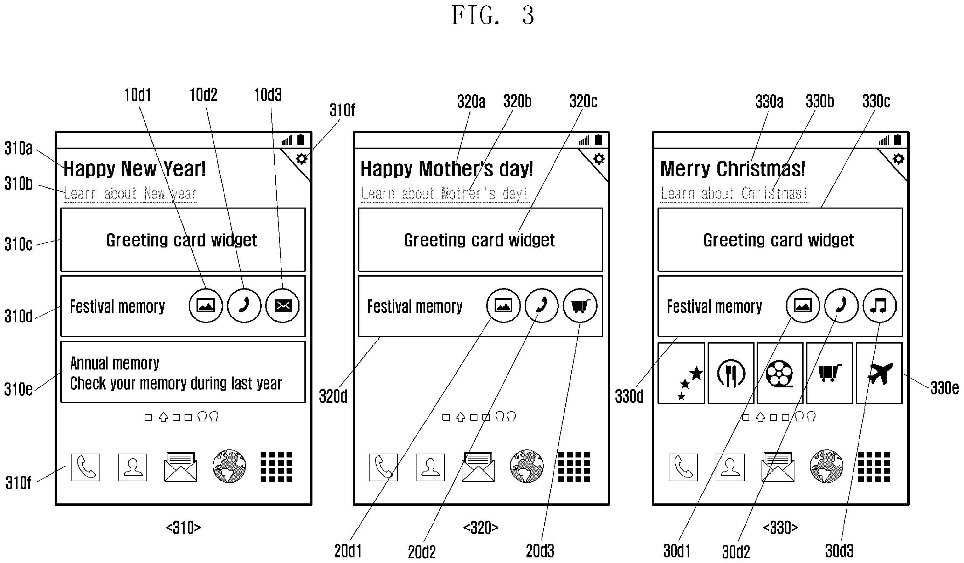

FIG. 3 is a view illustrating examples of home screens in specialized modes according to various embodiments of the present disclosure.

Referring to FIG. 3, reference numeral 310 indicates a home screen in a case where a particular day is January 1. The control unit 110 may configure a widget within a home screen on the basis of a use history. The home screen 310 may include a greeting phrase (date) 310a, basic information 310b, a greeting card widget 310c, a festival memory widget 310d, and an annual memory widget 310e. The greeting phrase (date) 310a expresses a particular day in words, such as Happy New Year. The basic information 310b enables the acquisition of information on the particular day. When the basic information is selected, the control unit 110 may access a web server, and may provide a webpage including information on Happy New Year. The greeting card widget 310c may induce the user to send a Happy New Year card. When the greeting card widget is selected, the control unit 110 may execute an application capable of sending a Happy New Year card. When an application to send a card does not exist, the control unit 110 may provide an application installation page.

The festival memory widget 310d; the control unit 110 may provide mainly-executed applications at the time of Happy New Year when the festival memory widget is selected. As an example, reference numeral 10d1 indicates a card application icon, reference numeral 10d2 indicates a telephone application icon, and reference numeral 10d3 indicates a message application icon. The annual memory widget 310e may provide photographs photographed in the last Happy New Year, cards received in the last New Year, and information on other users with whom the user has kept in touch in the last New Year. When an upper end 310f of the home screen 310 is selected, the control unit 110 may provide a setting screen related to a home screen.

Hereinafter, identical terms only have different reference numerals and refer to identical elements, and thus a detailed description thereof will be omitted. Reference numeral 320 indicates a home screen in a case where the particular day is Mother's Day. As an example, the home screen 320 of Mother's Day may include a greeting phrase (date) 320a, basic information 320b, a greeting card widget 320c, and a festival memory widget 320d. When the festival memory widget 320d is selected, the control unit 110 may provide applications mainly executed on Mother's Day. As an example, reference numeral 20d1 indicates a gallery application icon, reference numeral 20d2 indicates a telephone application icon, and reference numeral 20d3 indicates a shopping application icon.

Reference numeral 330 indicates a home screen in a case where the particular day is December 25 (Christmas Day). As an example, the home screen 330 of Christmas may include a greeting phrase (date) 330a, basic information 330b, a greeting card widget 330c, a festival memory widget 330d, and a service widget 330e. When the festival memory widget 330d is selected, the control unit 110 may provide applications mainly executed on Christmas Day. As an example, reference numeral 30d1 indicates a card application icon, reference numeral 30d2 indicates a telephone application icon, and reference numeral 30d3 indicates a music application icon.

When the mainly-used applications on the home screen 310 of Happy New Year, the mainly-used applications on the home screen 320 of Mother's Day, and the mainly-used applications on the home screen 330 of Christmas are compared with each other, there is a difference therebetween. This is because the control unit 110 configures a widget within a home screen on the basis of a use history corresponding to the particular day.

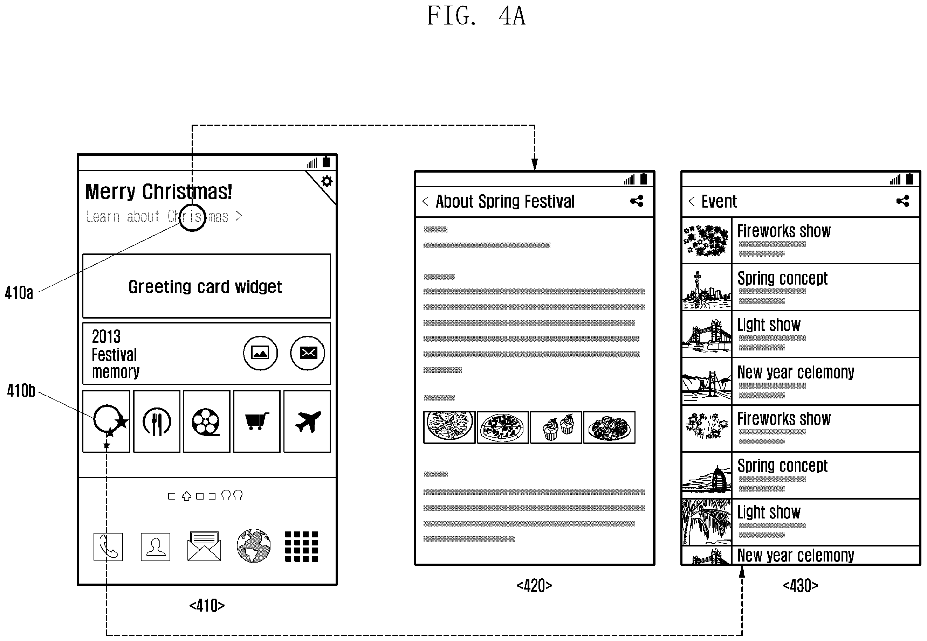

FIGS. 4A to 4D are views each illustrating an example of executing a function through a widget within a home screen according to various embodiments of the present disclosure.

Referring to FIG. 4A, reference numeral 410 indicates a home screen of Christmas. When reference numeral 410a is selected, the control unit 110 may access a web server, and may provide a webpage including information on Christmas, as indicated by reference numeral 420. When reference numeral 410b is selected, the control unit 110 may provide information on an event in relation to Christmas, as indicated by reference numeral 430. To this end, the control unit 110 may access the web server, and may collect events related to Christmas and may provide the collected events, or may provide a webpage including information on the events.

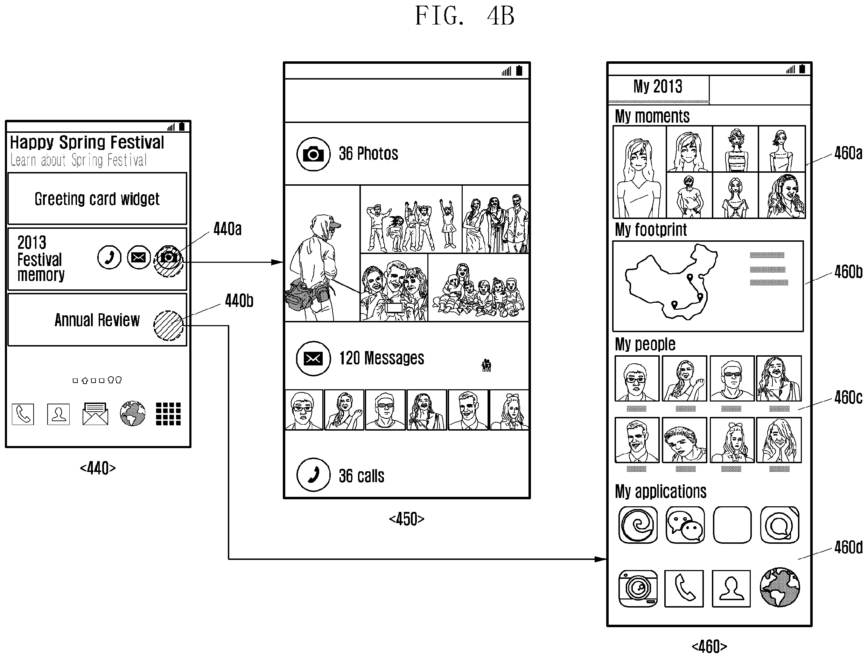

Referring to FIG. 4B, reference numeral 440 indicates a home screen of Happy Spring Festival. Referring to FIG. 4B, when reference numeral 440a is selected, the control unit 110 may execute a photograph application, and may provide photographs photographed at the last year's Happy Spring Festival, as indicated by reference numeral 450. When reference numeral 440b is selected, the control unit 110 may provide information obtained by collecting things which have occurred at the last year's Happy Spring Festival, as indicated by reference numeral 460. For example, as indicated by reference numeral 460, the control unit 110 may display photographs 460a photographed at the last year's Happy Spring Festival, locations 460b that the user visited during the last year's Happy Spring Festival, persons 460c with whom the user has kept in touch at the last year's Happy Spring Festival, and a list 460d of frequently-used applications at the last year's Happy Spring Festival.

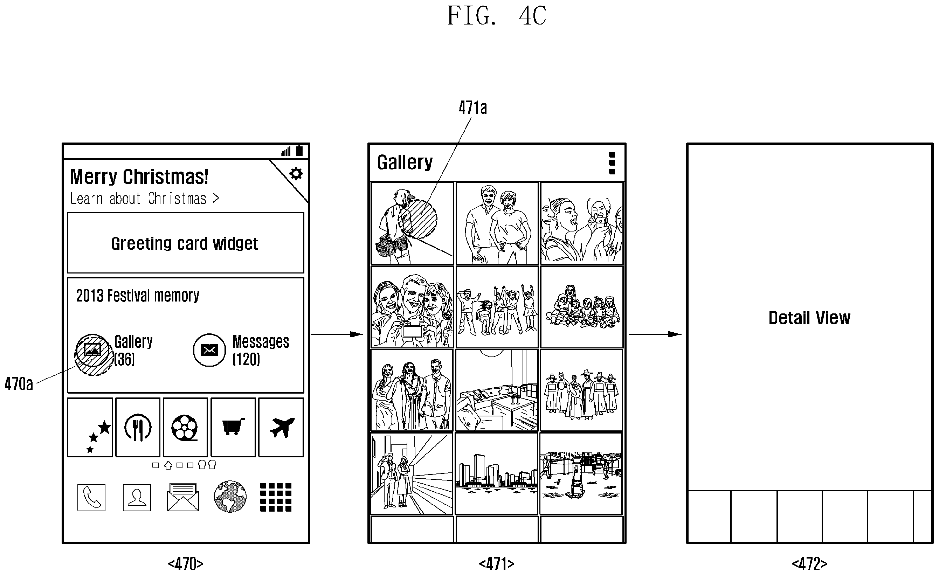

Referring to FIG. 4C, reference numeral 470 indicates a home screen of Christmas. Referring to FIG. 4C, when reference numeral 470a is selected, the control unit 110 may execute a photograph application, and may provide photographs photographed on the last Christmas Day, as indicated by reference numeral 471. When one of the multiple photographs 471a is selected, the control unit 110 may display the selected photograph as indicated by reference numeral 472.

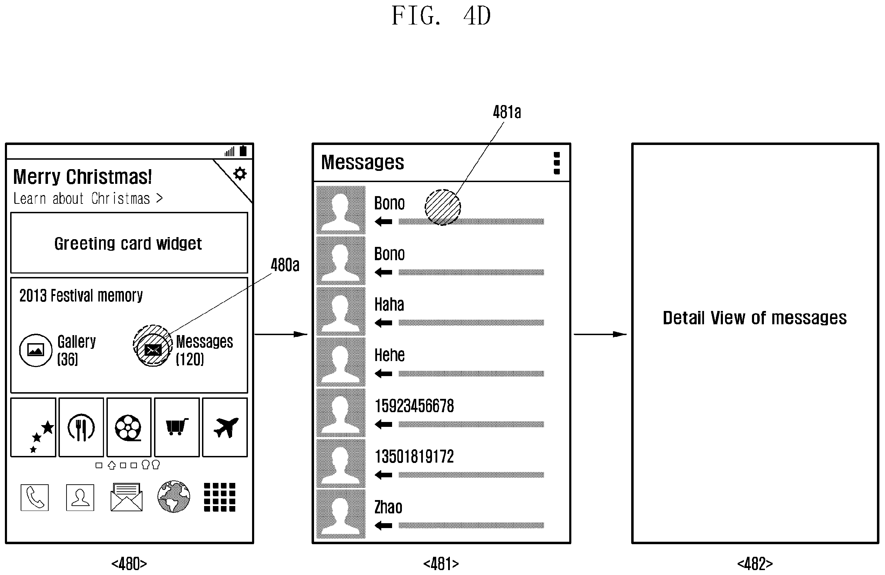

Referring to FIG 4D, reference numeral 480 indicates a home screen of Christmas. Referring to FIG 4D, when reference numeral 480a is selected, the control unit 110 may execute a message application, and may provide a result of the execution, as indicated by reference numeral 481. In the screen 481a, the control unit 110 may display messages, which have been exchanged on the last Christmas Day, by using the message application. When reference numeral 481a is selected which indicates a touch selecting one of the multiple messages, the control unit 110 may display the selected message as indicated by reference numeral 482.

According to an embodiment of the present disclosure, when the mode of the electronic device 100 is changed to a specialized mode, the control unit 110 may output an effect related to the particular day. Examples of the effect may include at least one of a lock wallpaper, a home screen, an output effect according to a touch, a ringtone, and an effect sound.

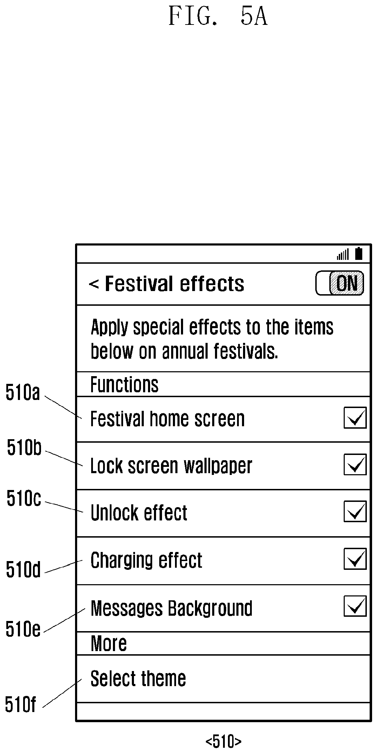

FIGS. 5A to 5E are views illustrating examples of applying effects according to various embodiments of the present disclosure.

Referring to FIG.5A, reference numeral 510 indicates an item list in the case of the application of an effect. The item list 510 may include a home screen 510a, a lock screen wallpaper 510b, an unlock effect 510c, a charging effect 510d, a message's background 510e, and a select theme 510f. The item list 510 may be provided in the form of a pop-up window. Although not illustrated in the item list 510, the item list 510 may include an output effect according to a touch, a ringtone, and an effect sound. The user may select an item to which an effect is to be applied, from the item list 510. For example, the user may apply only a wallpaper and a ringtone in order to apply an effect, and may not apply an effect sound.

The control unit 110 may display the lock screen wallpaper or the home screen suitable for the particular day.

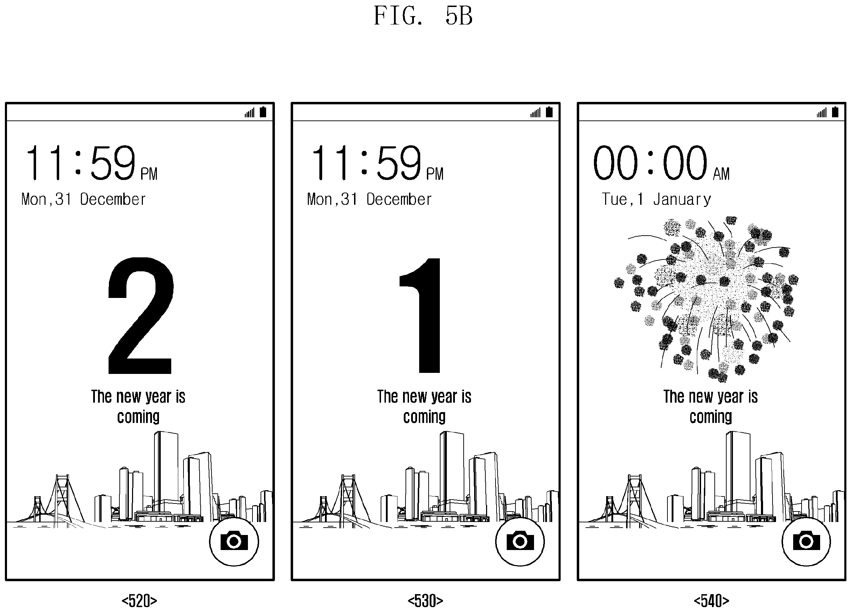

FIG. 5B is a view illustrating an example of applying an effect to a lock screen wallpaper.

Referring to FIG. 5B, when the particular day is New Year's Eve, the control unit 110 may count down the seconds from 11 hours 59 minutes 50 seconds, and may display how many seconds are left on the countdown on the lock screen wallpaper, as indicated by reference numerals 520 to 540. The control unit 110 may change a number displayed on the wallpaper as the seconds pass. Reference numeral 520 indicates a lock screen wallpaper, which is displayed at 11 hours 59 minutes 58 seconds, and on which the number "2" is displayed. Reference numeral 530 indicates a lock screen wallpaper, which is displayed at 11 hours 59 minutes 59 seconds, and on which the number "1" is displayed. Reference numeral 540 indicates a lock screen wallpaper, which is displayed at 12 hours 00 minutes 00 seconds and notifies the user of the beginning of the New Year. Alternatively, when the particular day is a birthday, the control unit 110 may display an image (or a moving image) of a cake with lit candles on the lock screen wallpaper.

According to an embodiment of the present disclosure, the control unit 110 may provide an output effect according to a touch which is suitable for the particular day. For example, when the particular day is a birthday, whenever a touch is made, the message "Happy birthday" may be displayed on the display unit 120 at a touch position or regardless of the touch position, or the output sound "Happy birthday" may be output. The control unit 110 may provide the ringtone suitable for the particular day. For example, when the particular day is a birthday, the ringtone may be a song which celebrates the birthday. When the particular day is Christmas Day, the ringtone may be a Christmas carol. Alternatively, the control unit 110 may provide an effect sound suitable for the particular day. The effect sound is a sound made whenever a key is pressed on a keypad, and may be a melody generated in order of pressed keys. Typically, when a key is pressed, the electronic device 100 outputs a sound corresponding to the pressed key. In a specialized mode, each key does not have a predetermined sound, and the electronic device 100 may output a melody which is automatically connected when each key is pressed.

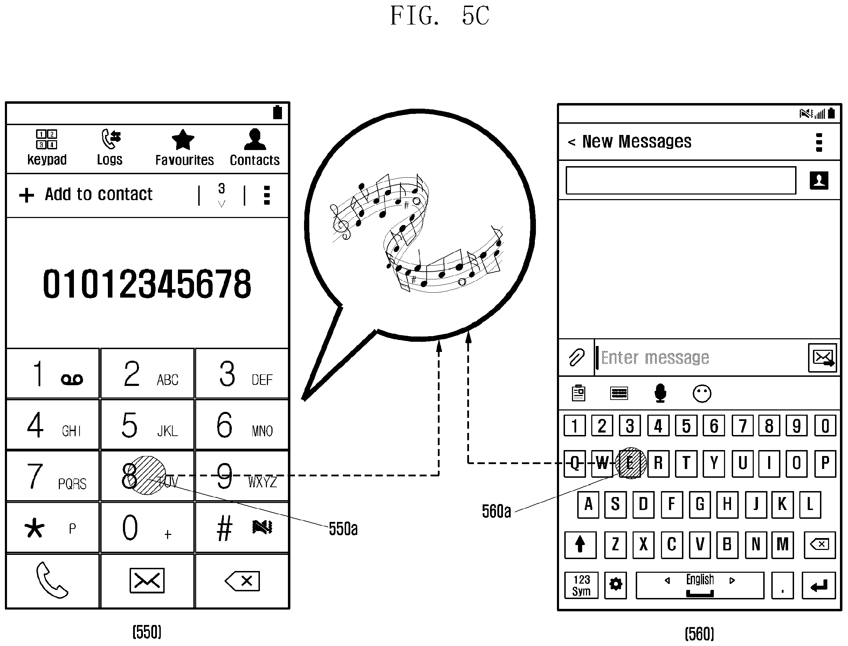

FIG. 5C is a view illustrating an example of applying an effect to an effect sound.

Referring to FIG. 5C, reference numeral 550 indicates a numeric keypad in a case where a telephone application is executed. The effect sound is not the output of a sound corresponding to a key, but is the output of a sound corresponding to a melody. When the number key "8" is selected on the numeric keypad as indicated reference numeral 550a, the control unit 110 may output a sound corresponding to a melody. Reference numeral 560 indicates a keyboard in a case where a message application is executed. When the key "E" is selected on a numeric keypad as indicated reference numeral 560a, the control unit 110 may output a sound corresponding to a melody.

For example, when the particular day is a birthday, "Happy Birthday Song" may be output as an effect sound. In order to generate a melody corresponding to the lyrics "Happy birthday to you" in the song, a relevant sound needs to be output in order of sol, sol, la, sol, do, do, and do. Referring to a number pattern indicated by reference numeral 550, the control unit 110 may output the sound "sol" in response to the first pressed key (i.e., the number key "0"), may output the sound "sol" in response to the second pressed key (i.e., the number key "1"), may output the sound "la" in response to the third pressed key (i.e., the number key "0"), may output the sound "sol" in response to the fourth pressed key (i.e., the number key "1"), and may all output the sound "do" in response to the fifth pressed key (i.e., the number key "2") to the seventh pressed key (i.e., the number key "4"). Specifically, when the first pressed key is the number key "1," conventionally, the sound "mi" corresponding to the number key "1" is originally output. However, according to an embodiment of the present disclosure, when the first pressed key is the number key "1," the sound "sol" may be output.

In addition, the effect may be generated from at least one of text, an image, audio, and a moving image. The effect may be generated, modified, or changed by the user, and may be set by default on the electronic device 100 according to the particular day.

According to an embodiment of the present disclosure, when a request is made by the user, the control unit 110 may transmit the effect to another electronic device. Specifically, the control unit 110 may receive an input corresponding to the selection of the effect by the user, and may perform the preview of the selected effect. When the selected effect is identified, the control unit 110 may transmit the effect. A method for delivering the effect may be performed in various communication methods, such as a message, an email, and the like. For example, the control unit 110 may transmit the effect to another electronic device through the communication unit 160 by using Wi-Fi, Bluetooth, and NFC. Accordingly, a user of the other electronic device can experience the same effect as the user does.

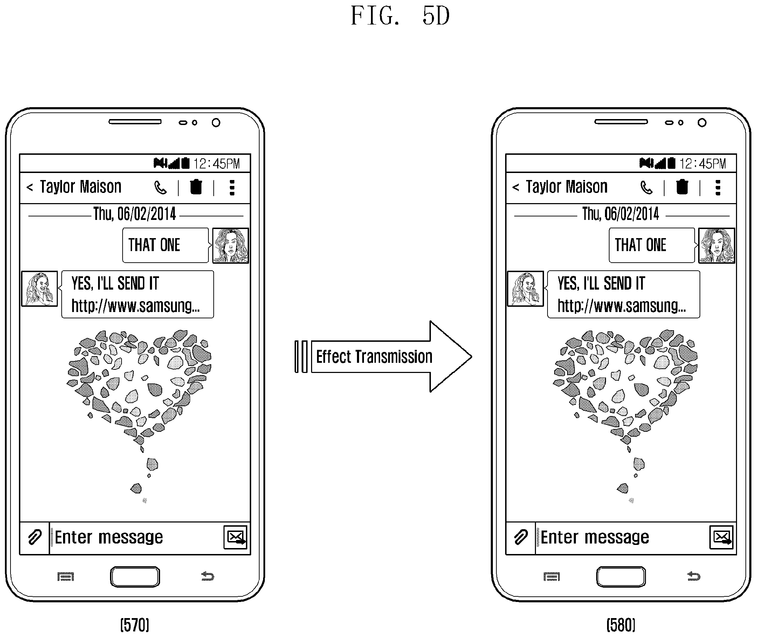

FIG. 5D is a view illustrating an example of transmitting an effect.

Referring to FIG. 5D, reference numeral 570 indicates a first electronic device, and reference numeral 580 indicates a second electronic device. After an effect is applied in the first electronic device 570, while the first electronic device 570 communicates with the second electronic device 580 by using a message application, the first electronic device 570 may transmit the effect to the second electronic device 580. The effect may be provided in the form of a tag, a uniform resource locator (URL), or the like.

The second electronic device 580 may receive the effect, and may determine whether the effect is applied, according to an input of another user. When the effect is applied in the second electronic device 580, the effect, which is set by the first electronic device 570, may be applied in the second electronic device 580 without any change. The effect may be applied in the second electronic device 580 during a time period which is set by the electronic device 100. When the time period expires, the application of the effect in the second electronic device 580 may be automatically cancelled. A particular application may be needed to apply the effect. When the particular application is installed in the second electronic device 580, the effect may be automatically registered in the second electronic device 580. In contrast, when the particular application is not installed in the second electronic device 580, the second electronic device 580 may first perform a process for installing the particular application, and may then register the effect therein.

According to an embodiments of the present disclosure, when another electronic device, on which an identical particular day is set, is located within a predetermined distance, the control unit 110 may automatically change a wallpaper. To this end, after the control unit 110 transmits the effect to said another electronic device as described above, the effect may be applied in said another electronic device as in the electronic device 100, and then the following operation may be performed. Alternatively, with respect to a particular day such as a wedding anniversary and the like, the particular day may be identically set on two electronic devices, and then the following operation may be performed. For example, the control unit 110 may detect whether the other electronic device is located within a predetermined distance. The communication unit 160 may transmit an identification signal to the other electronic device, and may receive a response signal from said another electronic device. The identification signal may include an identifier of the electronic device 100, whether a specialized mode is set for the electronic device 100, and whether a day on which the identification signal is transmitted includes a particular day. The response signal may include an identifier of the other electronic device, whether a specialized mode is set for the other electronic device, and whether the day on which the identification signal is transmitted includes a particular day. A method for transmitting and receiving the signals may employ NFC, Bluetooth, and Wi-Fi Direct. When it is determined that the identical particular day is set on said another electronic device, the control unit 110 may change a wallpaper in such a manner as to operate in conjunction with said another electronic device.

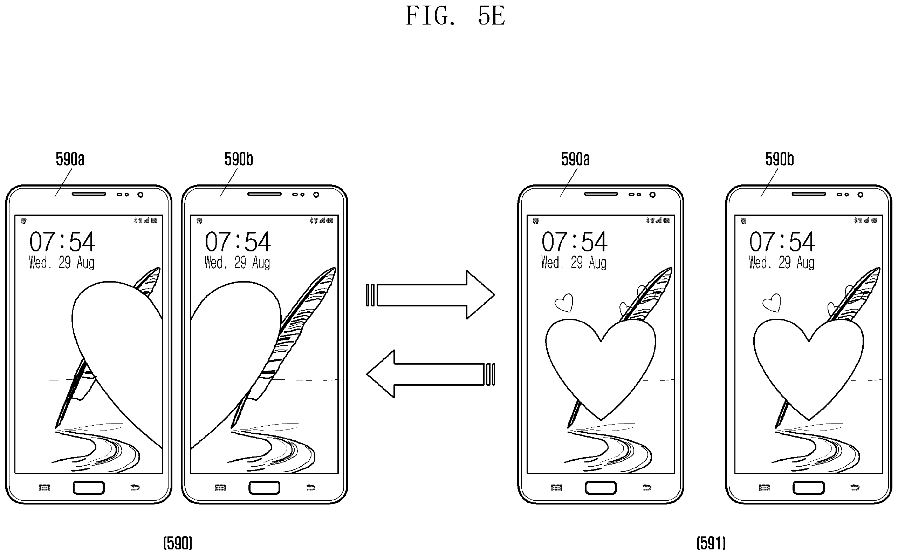

FIG. 5E is a view illustrating an example of changing wallpapers of two electronic devices according to an effect.

Referring to FIG. 5E, reference numeral 590a indicates a first electronic device, and reference numeral 590b indicates a second electronic device. As described above with reference to FIG. 5D, the first electronic device 590a and the second electronic device 590b may be devices in which the identical effect is both applied, or devices on which the identical particular day is both set. For example, the first electronic device 590a may transmit an identification signal to the second electronic device 590b, and may receive a response signal from the second electronic device 590b. The first electronic device 590a may determine whether the second electronic device 590b has set the identical particular day, on the basis of an identifier of the second electronic device 590b, whether a specialized mode is set for the second electronic device 590b, and whether a day on which the identification signal is transmitted includes a particular day, which are included in the response signal. Similarly, the second electronic device 590b may determine whether the first electronic device 590a has set the identical particular day, on the basis of an identifier of the first electronic device 590a, whether a specialized mode is set for the first electronic device 590a, and whether the day on which the identification signal is transmitted includes a particular day, which are included in the identification signal of the first electronic device 590a. Each of the first electronic device 590a and the second electronic device 590b may independently determine whether the counterpart electronic device has set the identical particular day. However, one of the first electronic device 590a and the second electronic device 590b may become a master terminal, and may control other electronic device as a slave terminal. Whether each electronic device may independently operate, or whether the two electronic devices operate in such a manner as to be divided into a master terminal and a slave terminal may be changed according to a wallpaper.

When the second electronic device 590b is located within a predetermined distance, the first electronic device 590a may perform a control operation for displaying half of a heart shape on a wallpaper, as indicated by reference numeral 590. The first electronic device 590a may control the second electronic device 590b to display a remaining half of the heart shape of the first electronic device 590a on a wallpaper. Accordingly, one heart shape may be formed when the first electronic device 590a and the second electronic device 590b are placed and seen side by side as indicated by reference numeral 590. Thereafter, when the first electronic device 590a and the second electronic device 590b are located outside of the predetermined distance, each of the first electronic device 590a and the second electronic device 590b may display a perfect heart shape on the wallpaper, as indicated by reference numeral 591.

In the drawings, an example has been illustrated in which the two electronic devices operate in conjunction with each other and change the wallpapers. However, various embodiments of the present disclosure are not limited thereto. Accordingly, an N number of electronic devices may operate in conjunction therewith and may change the wallpapers.

According to an embodiment of the present disclosure, the control unit 110 may provide an event notification which notifies of the particular day. The event notification may remind the user of the particular day before the particular day, and thereby may help the user to previously prepare the particular day-related event. For example, the control unit 110 may notify of all particular days included in a corresponding month on the first day of every month. When particular days included in January are Lunar New Year's Day and a birthday, the control unit 110 may notify of Lunar New Year's Day and a birthday, which are the particular days, on the first day of January. Also, the control unit 110 may notify of the particular day one day early. For example, a date, on which the particular day is reported before the particular day, may be set by the user, or may be set by default by the electronic device 100.

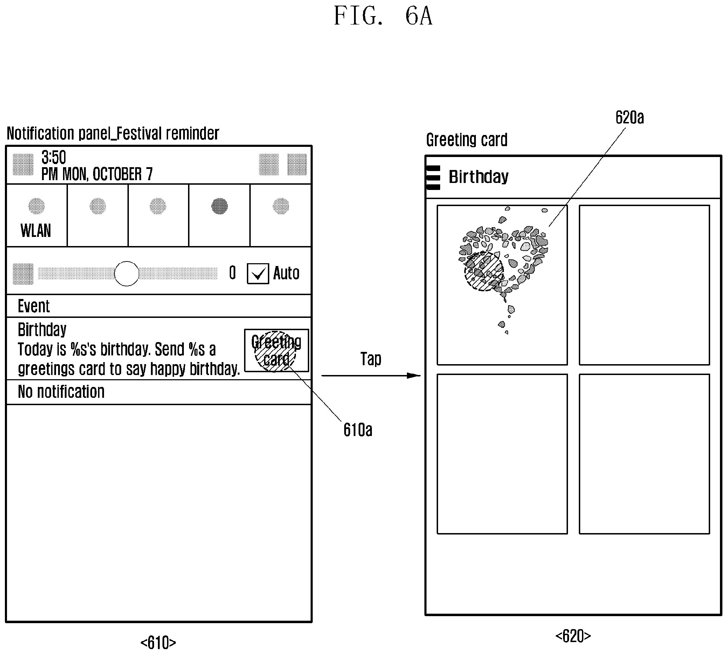

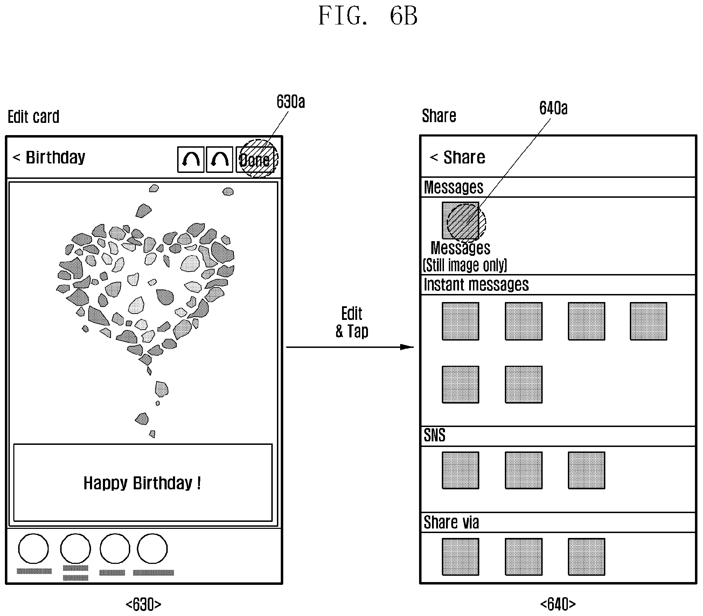

FIGS. 6A and 6B are views illustrating an example of sending a card on a birthday according to various embodiments of the present disclosure.

Referring to FIGS. 6A and 6B, reference numeral 610 indicates an example of an event notification which notifies of a birthday of another user. The event notification 610 may notify that today is another user's birthday, and may cause a card application icon to be displayed. When the card application icon is selected as indicated by reference numeral 610a, the control unit 110 may execute a card application. Reference numeral 620 indicates a screen of the card application. At this time, the control unit 110 may arrange multiple cards, and may first display a card related to a birthday. The user may select a desired card by using the card application, as indicated by reference numeral 620a.

Reference numeral 630 indicates a screen which enables the user to write greetings in the selected card. The user may write words that the user desires to say to another user, and may then select a button as indicated by reference numeral 630a. When the button is selected as indicated by reference numeral 630a, the control unit 110 may transmit the birthday card to the other user. In order to share a birthday of another user, the control unit 110 may provide a particular-day sharing screen as indicated by reference numeral 640. The user may share the birthday of another user with other persons in various methods, such as by selecting a message 640a.

According to an embodiment of the present disclosure, the control unit 110 may search for a particular day of another user, such as a birthday, an anniversary, a designated day, and the like of another user stored in a telephone directory. When a current date corresponds to a particular day of the other user, if the telephone directory is executed by the user, the control unit 110 may first display a contact of the other user for whom the current date is designated as the particular day.

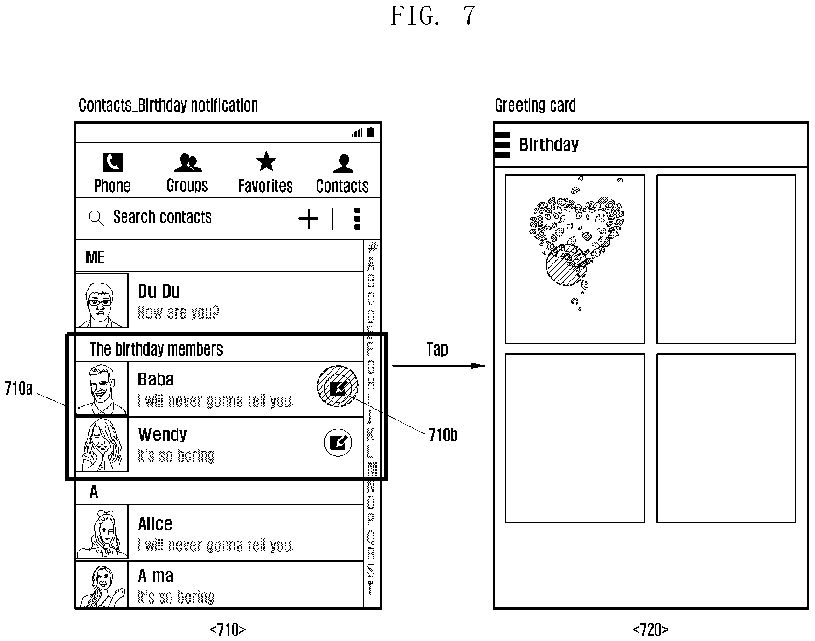

FIG. 7 is a view illustrating an example of providing a telephone directory according to various embodiments of the present disclosure.

Referring to FIG. 7, reference numeral 710 indicates a view illustrating a telephone directory. The control unit 110 may first display a contact of another user, for whom a current date is designated as a particular day, as indicated by reference numeral 710a. The control unit 110 may display, together, the contact of the other user and an application which is often used so that the user can easily keep in touch with the other user or can easily send a card to the other user. When a card application icon is selected as indicated by reference numeral 710b, the control unit 110 may execute a card application. Reference numeral 720 indicates a screen in a case where the card application is executed.

It will be appreciated that embodiments of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention. Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

While the present disclosure has been shown and described with reference to various embodiments thereof, it will be understood by those skilled in the art that various changes in form and details may be made therein without departing from the scope of the present disclosure as defined by the appended claims.

## Claims

1. A method of operation of an electronic device, the method comprising:
determining (210) whether a current date corresponds to one of particular days;
changing or setting (220) a mode of the electronic device to a date-related mode, the date-related mode being related to the one of the particular days, when the current date corresponds to one of the particular days;
wherein the method is **characterised by**:
displaying (230) a home screen (310, 320, 330, 410, 440, 470, 480) corresponding to the date-related mode, wherein the home screen includes at least one widget (310d, 320d, 330d) corresponding to a function, the function being related to use history of applications of the electronic device corresponding to the particular day;
displaying within the at least one widget application icons (10d2, 10d3, 20d1, 20d2, 20d3, 30d2, 30d3) of the mainly executed applications, corresponding to the particular day;
detecting (240) selection of one of said application icons from or via the home screen; and
executing (250) the application corresponding to the selected application icon,
wherein the executing (250) of the application comprises outputting an effect related to content created on the particular day.

2. The method of claim 1, wherein the application icons of the mainly executed applications comprise one or more of a telephone application icon (10d2, 20d2, 30d2), a message application icon (10d3), a gallery application icon (20d1), a shopping application icon (20d3) and a music application icon (30d3).

3. The method of claim 1 or claim 2, wherein the application icon comprises a photograph application icon (470a) and the outputting of the effect comprises:
displaying (471) photographs photographed on the particular day.

4. The method of claim 3 comprising displaying (472), when one of the photographs (471a) is selected, the selected photograph.

5. The method of claim 1 or claim 2, wherein the application icon comprises a message application icon (480a) and the outputting of the effect comprises:
displaying (481) messages which were exchanged on the particular day.

6. The method of claim 5 comprising displaying (482), when one of the messages (481a) is selected, the selected message.

7. The method of any preceding claim, wherein the home screen further comprises one or more of a greeting phrase (310a), basic information (310b) and a greeting card widget (310c).

8. The method of any preceding claim comprising, when the mode of the electronic device is changed (220) to the date-related mode, outputting at least one of a lock wallpaper effect related to the particular day, a ringtone effect related to the particular day and an effect sound related to the particular day.

9. The method of claim 8, wherein the effect sound related to the particular day is a sound made whenever a key is pressed on a keypad and is a melody generated in order of pressed keys.

10. An electronic device comprising:
a control unit (110) configured to:
determine (210) whether a current date corresponds to one of particular days,
change (220) a mode of the electronic device to a date-related mode, the date-related mode being related to one of the particular days, when the current date corresponds to one of the particular days,
wherein the device is **characterised in that** the control unit is further configured to:
display (230) a home screen (310, 320, 330, 410, 440, 470, 480) corresponding to the date-related mode, wherein the home screen includes at least one widget (310d, 320d, 330d) corresponding to a function, the function being related to use history of applications of the electronic device corresponding to the particular day,
display within the at least one widget application icons (10d2, 10d3, 20d1, 20d2, 20d3, 30d2, 30d3) of the mainly executed applications, corresponding to the particular day,
detect (240) selection of one of said application icons from or via the home screen, and
execute (250) the application corresponding to the selected application icon, wherein the executing (250) of the application is performed in a form to output an effect related to content created on the particular day.

11. The electronic device of claim 10, wherein the application icons of the mainly executed applications comprise one or more of a telephone application icon (10d2, 20d2, 30d2), a message application icon (10d3), a gallery application icon (20d1), a shopping application icon (20d3) and a music application icon (30d3).

12. The electronic device of claim 10 or claim 11, wherein the application icon comprises a photograph application icon (470a) and the outputting of the effect comprises:
displaying (471) photographs photographed on the particular day.

13. The electronic device of claim 10 or claim 11, wherein the application icon comprises a message application icon (480a) and the outputting of the effect comprises:
displaying (481) messages which were exchanged on the particular day.

14. The electronic device of any one of claims 10 to 13, wherein the home screen further comprises one or more of a greeting phrase (310a), basic information (310b) and a greeting card widget (310c).

15. The electronic device of any one of claims 10 to 14, wherein the control unit (110) is configured to output at least one of a lock wallpaper effect related to the particular day, a ringtone effect related to the particular day and an effect sound related to the particular day, when the mode of the electronic device is changed (220) to the date-related mode.

## Patentansprüche

1. Verfahren zum Bedienen einer elektronischen Vorrichtung, wobei das Verfahren umfasst: Bestimmen (210), ob ein aktuelles Datum einem von bestimmten Tagen entspricht; Wechseln oder Einstellen (220) eines Modus der elektronischen Vorrichtung in einen datumsbezogenen Modus, wobei der datumsbezogene Modus mit dem einen der bestimmten Tage in Bezug steht, wenn das aktuelle Datum einem der bestimmten Tage entspricht;
wobei das Verfahren **gekennzeichnet ist durch**:
Anzeigen (230) eines Startbildschirms (310, 320, 330, 410, 440, 470, 480), der dem datumsbezogenen Modus entspricht, wobei der Startbildschirm mindestens ein Widget (310d, 320d, 330d) umfasst, das einer Funktion entspricht, wobei die Funktion mit der Nutzungshistorie von Anwendungen der elektronischen Vorrichtung in Bezug steht, die dem bestimmten Tag entspricht;
Anzeigen innerhalb des mindestens einen Widgets von Anwendungssymbolen (10d2, 10d3, 20d1, 20d2, 20d3, 30d2, 30d3) der hauptsächlich ausgeführten Anwendungen, die dem bestimmten Tag entsprechen;
Erfassen (240) der Auswahl eines der Anwendungssymbole von dem oder über den Startbildschirm;
und Ausführen (250) der Anwendung, die dem ausgewählten Anwendungssymbol entspricht, wobei das Ausführen (250) der Anwendung das Ausgeben eines Effekts in Bezug auf Inhalte umfasst, die an dem bestimmten Tag erstellt wurden.

2. Verfahren nach Anspruch 1, wobei die Anwendungssymbole der hauptsächlich ausgeführten Anwendungen eines oder mehrere aus einem Telefonanwendungssymbol (10d2, 20d2, 30d2), einem Nachrichtenanwendungssymbol (10d3), einem Galerieanwendungssymbol (20d1), einem Kaufanwendungssymbol (20d3) und einem Musikanwendungssymbol (30d3) umfassen.

3. Verfahren nach Anspruch 1 oder Anspruch 2, wobei das Anwendungssymbol ein Fotoanwendungssymbol (470a) umfasst und die Ausgabe des Effekts umfasst:
Anzeigen (471) von Fotos, die an dem bestimmten Tag aufgenommen wurden.

4. Verfahren nach Anspruch 3, umfassend das Anzeigen (472) des ausgewählten Fotos, wenn eines der Fotos (471a) ausgewählt ist.

5. Verfahren nach Anspruch 1 oder Anspruch 2, wobei das Anwendungssymbol ein Nachrichtenanwendungssymbol (480a) umfasst und die Ausgabe des Effekts umfasst:
Anzeigen (481) von Nachrichten, die an dem bestimmten Tag ausgetauscht wurden.

6. Verfahren nach Anspruch 5, umfassend das Anzeigen (482) der ausgewählten Nachricht, wenn eine der Nachrichten (481a) ausgewählt ist.

7. Verfahren nach einem vorhergehenden Anspruch, wobei der Startbildschirm ferner eines oder mehreres aus einem Begrüßungssatz (310a), einer grundlegenden Information (310b) und einem Grußkarten-Widget (310c) umfasst.

8. Verfahren nach einem vorhergehenden Anspruch, umfassend, wenn der Modus der elektronischen Vorrichtung in den datumsbezogenen Modus gewechselt (220) wird, Ausgeben von mindestens einem aus einem mit dem bestimmten Tag verbundenen Sperr-Hintergrundbildeffekt, einem mit dem bestimmten Tag verbundenen Klingeltoneffekt und einem mit dem bestimmten Tag verbundenen Effektklang.

9. Verfahren nach Anspruch 8, wobei der auf den bestimmten Tag bezogene Effektklang ein Klang ist, der erzeugt wird, wenn eine Taste auf einer Tastatur gedrückt wird, und eine Melodie ist, die in der Reihenfolge der gedrückten Tasten erzeugt wird.

10. Elektronische Vorrichtung, umfassend: eine Steuereinheit (110), die dazu eingerichtet ist:
zu bestimmen (210), ob ein aktuelles Datum einem von bestimmten Tagen entspricht, einen Modus der elektronischen Vorrichtung in einen datumsbezogenen Modus zu wechseln (220), wobei der datumsbezogene Modus auf einen der bestimmten Tage bezogen ist, wenn das aktuelle Datum einem der bestimmten Tage entspricht, wobei die Vorrichtung **dadurch gekennzeichnet ist, dass** die Steuereinheit ferner dazu eingerichtet ist:
einen dem datumsbezogenen Modus entsprechenden Startbildschirm (310, 320, 330, 410, 440, 470, 480) anzuzeigen (230), wobei der Startbildschirm mindestens ein Widget (310d, 320d, 330d) umfasst, das einer Funktion entspricht, wobei die Funktion mit der dem bestimmten Tag entsprechenden Nutzungshistorie der Anwendungen der elektronischen Vorrichtung verbunden ist, innerhalb des mindestens einen Widgets Anwendungssymbole (10d2, 10d3, 20d1, 20d2, 20d3, 30d2, 30d3) der hauptsächlich entsprechend des bestimmten Tages ausgeführten Anwendungen anzuzeigen, die Auswahl eines der Anwendungssymbole von dem oder über den Startbildschirm zu erfassen (240) und die dem ausgewählten Anwendungssymbol entsprechende Anwendung auszuführen (250), wobei das Ausführen (250) der Anwendung in einer Form durchgeführt wird, einen Effekt in Zusammenhang mit an dem bestimmten Tag erstellten Inhalten auszugeben.

11. Elektronische Vorrichtung nach Anspruch 10, wobei die Anwendungssymbole der hauptsächlich ausgeführten Anwendungen eines oder mehrere aus einem Telefonanwendungssymbol (10d2, 20d2, 30d2), einem Nachrichtenanwendungssymbol (10d3), einem Galerieanwendungssymbol (20d1), einem Kaufanwendungssymbol (20d3) und einem Musikanwendungssymbol (30d3) umfassen.

12. Elektronische Vorrichtung nach Anspruch 10 oder Anspruch 11, wobei das Anwendungssymbol ein Fotoanwendungssymbol (470a) umfasst und die Ausgabe des Effekts umfasst:
Anzeigen (471) von Fotos, die an dem bestimmten Tag aufgenommen wurden.

13. Elektronische Vorrichtung nach Anspruch 10 oder Anspruch 11, wobei das Anwendungssymbol ein Nachrichtenanwendungssymbol (480a) umfasst und die Ausgabe des Effekts umfasst:
Anzeigen (481) von Nachrichten, die an dem bestimmten Tag ausgetauscht wurden.

14. Elektronische Vorrichtung nach einem der Ansprüche 10 bis 13, wobei der Startbildschirm ferner eines oder mehreres aus einem Begrüßungssatz (310a), einer grundlegenden Information (310b) und einem Grußkarten-Widget (310c) umfasst.

15. Elektronische Vorrichtung nach einem der Ansprüche 10 bis 14, wobei die Steuereinheit (110) dazu eingerichtet ist, mindestens einen aus einem auf den bestimmten Tag bezogenen Sperr-Hintergrundbildeffekt, einen auf den bestimmten Tag bezogenen Klingeltoneffekt und einen auf den bestimmten Tag bezogenen Effektklang auszugeben, wenn der Modus der elektronischen Vorrichtung in den datumsbezogenen Modus gewechselt (220) wird.

## Revendications

1. Procédé de fonctionnement d'un dispositif électronique, le procédé comprenant :
la détermination (210) pour savoir si une date courante correspond à l'un de jours particuliers ;
le changement ou le paramétrage (220) d'un mode du dispositif électronique en mode associé à une date, le mode associé à une date étant associé audit l'un des jours particuliers, lorsque la date courante correspond à l'un des jours particuliers ;
ledit procédé étant **caractérisé par** :
l'affichage (230) d'un écran d'accueil (310, 320, 330, 410, 440, 470, 480) correspondant au mode associé à une date, ledit écran d'accueil comprenant au moins un objet graphique logiciel (310d, 320d, 330d) correspondant à une fonction, la fonction étant associée à un historique d'utilisation d'applications du dispositif électronique correspondant au jour particulier ;
l'affichage à l'intérieur des icônes d'application (10d2, 10d3, 20d1, 20d2, 20d3, 30d2, 30d3) d'au moins un objet graphique logiciel des applications principalement exécutées, correspondant au jour particulier ;
la détection (240) d'une sélection de l'une desdites icônes d'application à partir de ou via l'écran d'accueil ; et
l'exécution (250) de l'application correspondant à l'icône d'application sélectionnée,
ladite exécution (250) de l'application comprenant l'émission d'un effet associé à un contenu créé le jour particulier.

2. Procédé selon la revendication 1, lesdites icônes d'application des applications principalement exécutées comprenant une ou plusieurs icônes parmi une icône d'application de téléphone (10d2, 20d2, 30d2), une icône d'application de message (10d3), une icône d'application de galerie (20d1), une icône d'application de shopping (20d3) et une icône d'application de musique (30d3).

3. Procédé selon la revendication 1 ou 2, ladite icône d'application comprenant une icône d'application de photographie (470a) et ladite émission de l'effet comprenant :
l'affichage (471) de photographies photographiées le jour particulier.

4. Procédé selon la revendication 3 comprenant l'affichage (472), lorsque l'une des photographies (471a) est sélectionnée, de la photographie sélectionnée.

5. Procédé selon la revendication 1 ou 2, ladite icône d'application comprenant une icône d'application de message (480a) et ladite émission de l'effet comprenant :
l'affichage (481) de messages qui ont été échangés le jour particulier.

6. Procédé selon la revendication 5 comprenant l'affichage (482), lorsque l'un des messages (481a) est sélectionné, du message sélectionné.

7. Procédé selon l'une quelconque des revendications précédentes, ledit écran d'accueil comprenant en outre un ou plusieurs éléments parmi une phrase de voeux (310a), une information basique (310b) et un objet graphique logiciel de carte de voeux (310c).

8. Procédé selon l'une quelconque des revendications précédentes comprenant, lorsque le mode du dispositif électronique est changé (220) en mode associé à une date, l'émission d'au moins un effet parmi un effet de papier peint de verrouillage associé au jour particulier, un effet de sonnerie associé au jour particulier et un son d'effet associé au jour particulier.

9. Procédé selon la revendication 8, ledit son d'effet associé au jour particulier étant un son fait dès qu'une touche est enfoncée sur un clavier et étant une mélodie générée dans l'ordre des touches enfoncées.

10. Dispositif électronique comprenant :
une unité de commande (110) configurée pour :
déterminer (210) si une date courante correspond à l'un des jours particuliers,
changer (220) un mode du dispositif électronique en mode associé à une date, le mode associé à une date étant associé à l'un des jours particuliers, lorsque la date courante correspond à l'un des jours particuliers,
ledit dispositif étant **caractérisé en ce que** l'unité de commande est en outre configurée pour :
afficher (230) un écran d'accueil (310, 320, 330, 410, 440, 470, 480) correspondant au mode associé à une date, ledit écran d'accueil comprenant au moins un objet graphique logiciel (310d, 320d, 330d) correspondant à une fonction, la fonction étant associée à un historique d'utilisation d'applications du dispositif électronique correspondant au jour particulier,
afficher à l'intérieur des icônes d'application (10d2, 10d3, 20d1, 20d2, 20d3, 30d2, 30d3) d'au moins un objet graphique logiciel les applications principalement exécutées, correspondant au jour particulier ;
détecter (240) une sélection de l'une desdites icônes d'application à partir de ou via l'écran d'accueil ; et
exécuter (250) l'application correspondant à l'icône d'application sélectionnée, l'exécution (250) de l'application étant effectuée sous une forme pour émettre un effet associé à un contenu créé le jour particulier.

11. Dispositif électronique selon la revendication 10, lesdites icônes d'application des applications principalement exécutées comprenant une ou plusieurs icônes parmi une icône d'application de téléphone (10d2, 20d2, 30d2), une icône d'application de message (10d3), une icône d'application de galerie (20d1), une icône d'application de shopping (20d3) et une icône d'application de musique (30d3).

12. Dispositif électronique selon la revendication 10 ou 11, ladite icône d'application comprenant une icône d'application de photographie (470a) et ladite émission de l'effet comprenant :
l'affichage (471) de photographies photographiées le jour particulier.

13. Dispositif électronique selon la revendication 10 ou 11, ladite icône d'application comprenant une icône d'application de message (480a) et ladite émission de l'effet comprenant :
l'affichage (481) de messages qui ont été échangés le jour particulier.

14. Dispositif électronique selon la revendication 10 à 13, ledit écran d'accueil comprenant en outre un ou plusieurs éléments parmi une phrase de voeux (310a), une information basique (310b) et un objet graphique logiciel de carte de voeux (310c).

15. Dispositif électronique selon la revendication 10 à 14, ladite unité de commande (110) étant configurée pour émettre au moins un effet parmi un effet de papier peint de verrouillage associé au jour particulier, un effet de sonnerie associé au jour particulier et un son d'effet associé au jour particulier, lorsque le mode du dispositif électronique est changé (220) en mode associé à une date.
